# EUROPEAN PATENT SPECIFICATION

(11) **EP 0 599 616 B1**
(45) Date of publication and mention of the grant of the patent: **17.03.1999**
(21) Application number: 93309353.6
(22) Date of filing: 24.11.1993
(51) Int. Cl.: C08K 5/54, C08L 83/04

(54) **One part room temperature vulcanizing composition**
Bei Raumtemperatur vulkanisierende Einkomponentenzusammensetzung
Composition monocomposante vulcanisable à la température ambiante

(30) Priority: 25.11.1992 US 981571; 23.07.1993 US 96315
(43) Date of publication of application: 01.06.1994
(73) Proprietor: GENERAL ELECTRIC COMPANY, Schenectady, NY 12345 (US)
(72) Inventor: Dziark, John Joseph, Ballston Spa, New York 12020 (US); Pink, Michael Robert, Schulyerville, New York 12871 (US); Martucci, John Patrick, Ballston Lake, New York 12109 (US)
(74) Representative: Szary, Anne Catherine, Dr.

(56) References cited:
- WO-A-93/19130
- US-A- 4 514 529
- US-A- 4 528 324

## Description

### CROSS-REFERENCE TO RELATED APPLICATIONS

This application is a continuation-in-part of U. S. Serial number 07/981,571 filed November 25, 1992.

### FIELD OF THE INVENTION

The field of the present invention relates to one part room temperature vulcanizable silicone rubber sealants that have improved application rates while maintaining a good resistance to vertical flow.

### BACKGROUND OF THE INVENTION

The instant invention relates to one-part room temperature vulcanizing (RTV) silicone rubber compositions which can be extruded at a high application rate and also exhibit a resistance to flow vertically when applied to a vertical surface. More particularly this invention relates to ketoxime RTV rubber compositions capable of high rates of extrusion while maintaining good resistance to vertical flow.

RTV rubber compositions are known in the art. Such compositions are known for their ability to resist change at elevated temperatures and exposure to adverse conditions over extended periods of time. In general, materials are needed which have outstanding properties such as good tensile strength and the ability to retain those outstanding properties when challenged by exposure to chemical agents known to reduce or diminish performance.

Successful efforts have been made to produce RTV elastomer, compositions having increased strength and adhesion. For example ketoxime sealants as set forth in U.S. patent application Serial Number 07/857,202, filed March 25, 1992, entitled "One Part Room Temperature Vulcanizing Compositions with Improved Oil Resistance and Adhesion, assigned to General Electric Company exhibit such desirable properties. When such ketoxime sealants are compounded continuously, the cross linker, adhesion promoter (when used), and catalyst are commonly added to an extruder as a single solution in a one step catalyzation. The resulting composition has good physical properties but is difficult to apply at high rates.

Successful efforts have been made to produce RTV elastomer compositions having increased strength and adhesion. For example, ketoxime sealants as set forth in U. S. patent application Serial Number 07/891,571, filed November 25, 1992, entitled "One Part Room Temperature Vulcanizing Composition Having a High Rate of Extrusion," assigned to General Electric Company exhibit such desirable properties. When such ketoxime sealants are compounded continuously the catalyzation is divided wherein the cross linking agent and an optional adhesion promoter are added to an extruder followed by the addition of the tin containing catalyst further down the extruder. This two step catalyzation results in sealants that possess both good physical properties and the ability to be applied at a high rate of application, however the ability of the sealant composition to resist gravity induced flow when applied to a vertical surface could be improved. It is therefor very desirable to provide RTV compositions having not only good tensile strength, fast cure rates, and good room temperature adhesion but which may also be applied at a high rate of application and when applied to a vertical surface exhibit a low rate of gravity induced flow from the point of application.

### SUMMARY OF THE INVENTION

The instant invention is based upon the discovery that adding the ketoxime cross linking agent to the diorganopolysiloxane polymer prior to the addition of the other components of the RTV composition preserves the benefit of being able to apply the sealant at high application rates. By comparison to the prior art, the instant invention further imparts the additional benefit of an increased resistance to vertical flow or sag when the sealant is applied to a vertical surface.

Specifically, reaction of a silanol polymer with a ketoxime cross-linking agent prior to its introduction into an extruder and prior to addition of the other RTV components results in the preparation of a sealant possessing both a high application rate and a desirable thixotropy, said sealant being more resistant to flow when applied to a vertical surface.

In a particular embodiment, methyltris(methylethylketoximo)silane, a cross linking agent, and a diorganopolysiloxane polymer was added to a reaction section preceding an extruder. The reaction section consists of a static mixer attached to an extruder. An inorganic filler was added in the first section of the extruder, about 70% of an M-stopped silicone fluid was added at approximately the middle of the extruder, and a solution containing the remaining 30% of the M-stopped fluid, a dibutyltin dilaurate catalyst, and an optional adhesion promoter gamma-aminopropyltriethoxysilane was added toward the end of the extruder.

The present invention is directed to a method for producing a room-temperature vulcanizable composition having a high thixotropy and a high rate of extrusion from an extruder having a front end and an exit end with a middle in between, said extruder preceded by a static mixer having an entry and an exit to a first injection port of said extruder, said extruder having a second injection port after the first injection port, a third injection port at the middle of said extruder and a fourth injection port between the middle of the extruder wherein is located the third injection port and the exit port, said method comprising the steps of:
(1) supplying a base composition (A) to a static reactor which feeds the base composition from an exit port of the static mixer to an extruder at a first supply port of the extruder, said base composition; (A) comprising 100 parts by weight of a diorganopolysiloxane polymer (A1), said diorganopolysiloxane polymer having the formula HO(R₂SiO)ₓH where each R is a monovalent hydrocarbon radical free of aliphatic unsaturation and containing from 1 to 10 carbon atoms, and x varies so that (A1) has a viscosity ranging from 600 to 300,000 cps at 25°C; and at least one cross-linking agent (A4) selected from the group consisting of alkyl-tris(dialkylketoximo)silane, alkyl-tris (dialkenyl-ketoximo)silane, alkyl-tris(alkylalkenyl-ketoximo)silane, alkenyltris(dialkyl-ketoximo)silane, alkenyl-tris(dialkenylketoximo)silane, alkenyl-tris(alkylalkenylketoximo)silane; being reacted at a temperature ranging from 20°C to 120°C for a period of time ranging from 2 minutes to 60 minutes, wherein said diorganopolysiloxane polymer (A1) and said cross-linking agent (A4) are added to said static mixer first; and
(2) adding at a second injection port (A2) from 3 to 25 parts by weight based upon (A1) of a silica filler having a surface area of from 100 to 300 m²/g in an untreated state; and (A3) up to 200 parts by weight based upon (A1) of finely divided calcium carbonate; and
(3) adding at a third injection port (B1) up to about 56 parts by weight based upon (A1), of an M-stopped fluid having a viscosity ranging from 50 to 10,000 cps at 25°C; and
(4) adding at a fourth injection port (B1) in an amount of up to 24 parts by weight based upon (A1), and (B2) a tin based catalyst present in an amount of up to 0.50 parts by weight based upon 100 parts of the base composition (A), and optionally (A4) gamma-aminopropyltriethoxysilane present in an amount up to 4 parts by weight based upon 100 parts of the base composition (A); wherein the amount of cross-linking agent (A4) ranges from 2 to 15 parts by weight based on the sum of (A1), (A2) and (A3), and
(5) extruding the resultant composition from the extruder such that said room temperature vulcanizable sealant composition having high application and low sag exists the exit port of the extruder.

In accordance with the present invention,
(A1) is a silanol terminated diorganopolysilxane having a viscosity ranging from 60 to 300,000, preferably from 2,000 to 200,000 and more preferably from 3,000 to 150,000 cps at 25° C. (A1) has the formula:

   HO(R₂SiO)ₓH

   where each R is independently selected from monovalent hydrocarbon radicals, free of aliphatic unsaturation and containing from 1 to 10 carbon atoms, and x varies so that (A1) has a viscosity ranging from 600 to 300,000 cps at 25° C. In the examples that follow, x has been selected such that (A1) has a viscosity of 30,000 cps at 25° C. It is known in the art by those having ordinary skill in the art that molecular weight and viscosity are directly related in the polymeric siloxanes. Thus choosing higher values of x would lead to higher viscosities.
(A2) comprises from 3 to 25, preferably from 3 to 20 and more preferably from 5 to 15 parts by weight based upon (A1) of a reinforcing filler such as fumed silica, SiO₂. The filler preferably has a surface area of between 100 and 300 m²/g, more preferably the filler has a surface area of about 200 m²/g in the untreated state. The filler may be treated with various agents so as to prevent the composition from structuring, for example, cyclopolysiloxanes as disclosed in U.S. Patent number 2,938,009 to Lucas and silazanes as disclosed in U. S. Patent number 3,635,743 to Smith, or both. The cyclopolysiloxanes may be, for example, octamethylcyclotetrasiloxane ("D4") present in an amount of 15 to 20 weight percent of the filler. In the examples below, (A2) is a chlorosilane treated fumed silica available commercially from DeGussa Corporation of Plainfield, New Jersey.
(A3) is a finely divided calcium carbonate, CaCO₃, filler that may be present in an amount up to about 200 parts by weight based upon (A1). In the examples below the calcium carbonate filler has been omitted from the formulation.
(A4) is a cross-linking agent selected from the group consisting of alkyl-tris(dialkyl-ketoximo)silane, alkyl-tris(dialkenyl-ketoximo)silane, alkyltris(alkylalkenyl-ketoximo)silane, alkenyl-tris(dialkyl-ketoximo)silane, alkenyl-tris(dialkenyl-ketoximo)silane, alkenyl-tris(alkylalkenylketoximo)silane. Preferably (A4) comprises (a) methyltris(methylethylketoximo)silane or (b) vinyltris(methylethylketoximo)silane or mixtures of (a) and (b). The cross-linking agent is present in an amount from 2 to 15 parts by weight based upon 100 parts of the sum of (A1), (A2), and (A3), preferably from 2 to 10 parts by weight based upon such sum, and more preferably from 3 to 7 parts by weight based upon such sum.
(A5) is gamma-aminopropyltriethoxysilane present in an amount up to 4 parts by weight based upon 100 parts of the base composition (A). Preferably, the gamma-aminopropyltriethoxysilane is present in an amount from 0.2 to 2 parts by weight based upon (A) and more preferably from 0.3 to 1.5 parts by weight based upon (A).

(B1) is a processing aid or plasticizer in the form of an M-stopped fluid. In particular, (B1) is a triethylsilyl stopped siloxane having a viscosity ranging from 50 to 10,000, preferably 50 to 3,000, and more preferably 50 to 1,000 cps at 25° C. In the examples below, the M-stopped fluid is a polymer having the form:

   R₃Si(OSiR₂)ₓOSiR₃

   where each R is methyl and x is selected so that the viscosity is about 100 cps at 25° C. In the present invention, (B1) may be present in an amount up to 80 parts by weight, based upon (A1), preferably up to about 60 parts by weight based upon (A1), and more preferably up to about 40 parts by weight based upon (A1), (B1) is optionally partitioned between the last two injection ports of the extruder.
(B2) is a tin based catalyst that may be present in an amount of up to 0.50 parts by weight based upon 100 parts of the base composition (A). Preferably the catalyst is present in an amount from 0.01 to 0.4 parts by weight based upon (A), and more preferably from 0.05 to 0.30 parts based upon (A). The tin based catalyst is added in an amount such that there is between 19 and 760 ppm tin in the resultant sealant composition, and more preferably from 95 to about 570 ppm tin. Dibutyltin dilaurate is one of the tin catalysts that is preferred.

### EXAMPLES

The following examples are designed to illustrate and clarify the instant invention with respect to the prior art for the benefit of those persons having ordinary skill in the art, thereby enabling them to practice this invention without undue experimentation. The following examples are illustrative only and are not to be considered as limiting the scope of the present invention.

Aspects of applicant's invention and the following examples are more easily understood by reference to a description of the apparatus utilized to measure the flow of sealants when they are applied to a vertical surface. The flow test is conducted with a flow test jig. The flow test jig is stabilized at a temperature of 23°C (74°F), varying no more than 2.2°C (4 degrees Fahrenheit), and at a relative humidity of 50 percent, varying no more than 5 percent. The flow test jig possesses a recessed cavity to receive the test sealant, an ace, and a plunger among the elements of its construction. An example of the flow test jig is illustrated in the military specification for adhesive sealants, silicone, RTV, one-component, identified by the military specification number MIL-A-48106B, at figure one.

The test jig is equipped with a plunger which is used to displace the sealant sample from the recessed cavity. The recessed cavity is filled with the test sealant from a representative sample container. The adhesive-sealant must not be worked with a spatula but should leveled off even with the block containing the recessed cavity. The military specification stipulates that the manner of leveling the adhesive-sealant sample is done by making two passes with the spatula, each starting at the center and moving towards the sides of the jig. Within 10 seconds of after the adhesive-sealant is leveled the jig is placed on its base and the plunger immediately advanced to the limit of its forward travel. The cylindrical section formed in the test flow jig is allowed to flow under its own weight on a vertical surface. The flow test begins when the plunger is advanced to the limit of its forward travel, and the flow measurement is taken immediately after the expiration of a 3 minute time period or when the flow has ceased. The flow is measured tangently from the lower edge of the plunger surface to the furthest point to which flow has occurred. The measurement taken after the 3 minute interval is considered to be the initial flow of the silicone adhesive-sealant.

The following examples demonstrate at least one embodiment of applicants' invention.

### EXAMPLE ONE

Example one illustrates an embodiment of the invention whereby a sealant has been manufactured by reacting the silanol polymer with a cross-linking agent prior to introduction into an extruder.

An extruder was modified such that a silanol polymer methyltriketoximo-silane reaction section preceded the extruder. The reaction section consisted of a static mixer one foot in length followed by a 1.22 m (four foot) section of 19 mm (3/4") id pipe, another static mixer 0.30 m (one foot) long, and a 0.45 m (one and one half foot) long 19 mm (3/4") id pipe. The first section of pipe, the second static mixer, and the second section of pipe were heated, using heating tape, such that the room temperature polymer fed to the reaction section exited the second static mixer at a temperature ranging from about 75 to about 85°C.

The sealant of this example was prepared using the following proportions of ingredients:

| **COMPONENT** | **PARTS BY WEIGHT** |
|---|---|
| Silanol polymer (∼30,000 cps) | 100 parts |
| Methyltriketoximosilane | 5.04 parts |
| Chlorosilane treated fumed silica | 13 parts |
| M-stopped fluid | 13 parts |
| aminopropyltriethoxysilane | 0.63 parts |
| dibutyltin dilaureate | 0.063 parts |

In this example, the methyltriketoximosilane was added to the silanol polymer at the beginning of the reaction system. The silane treated fumed silica is added in the first section of the extruder. About two-thirds to three quarters of the M-stopped fluid is added at the middle of the extruder. A solution containing the remainder of the M-stopped fluid, the aminopropyltriethoxysilane, and dibutyltin dilaureate was added towards the end of the extruder. The sealant made in this manner had a application rate of 307 g/min. when extruded through a 3.18 mm (1/8") nozzle at 621 KPa (90 psi). The flow when measured per the stipulations of the military specification quoted and previously cited was 3.18 mm (0.15 inches).

### EXAMPLE TWO Comparative

This example describes a sealant of essentially the same composition as that listed in Example One, but where the methyltriketoximosilane is added at the initial section of the extruder, in contrast to the mode of addition in the previous example where it was added at the beginning of the reaction system.

A sealant was prepared that had the following proportions of ingredients:

| **COMPONENT** | **PARTS BY WEIGHT** |
|---|---|
| Silanol polymer (∼30,000 cps) | 100 parts |
| Methyltriketoximosilane | 5.04 parts |
| Chlorosilane treated fumed silica | 13 parts |
| M-stopped fluid | 13 parts |
| aminopropyltriethoxysilane | 0.63 parts |
| dibutyltin dilaureate | 0.063 parts |

The addition points of all the reactants were identical to those used in Example One with the exception of the methyltriketoximosilane which was added at the initial stages of the extruder in contrast to being added at the initial stage of the static mixer. The sealant thus prepared had an application rate of 296 g/min. and a flow of 66 mm (2.6 inches).

### EXAMPLE THREE Comparative

In this example the cross linking agent, methyltriketoximosilane, was added at the end of the extruder concurrently with the aminopropyltriethoxysilane and the dibutyltin dilaurate.

| **COMPONENT** | **PARTS BY WEIGHT** |
|---|---|
| Silanol polymer (∼30,000 cps) | 100 parts |
| Methyltriketoximosilane | 5.04 parts |
| Chlorosilane treated fumed silica | 13 parts |
| M-stopped fluid | 13 parts |
| aminopropyltriethoxysilane | 0.63 parts |
| dibutylin dilaureate | 0.063 parts |

The addition points were the same as in example one with the exception that the methyltriketoximosilane was added toward the end of the extruder and all the M-stopped fluid was added approximately in the middle of the extruder. The sealant prepared by this variation of experimental conditions exhibited an application rate of 152 g/min. and a flow of 6.35 mm (0.25 inches).

### EXAMPLE FOUR

This example, an embodiment of the instant invention, repeats the conditions of example one with the exception of using a higher level of dibutyltin dilaurate.

| **COMPONENT** | **PARTS BY WEIGHT** |
|---|---|
| Silanol polymer (∼30,000 cps) | 100 parts |
| Methyltriketoximosilane | 5.04 parts |
| Chlorosilane treated fumed silica | 13 parts |
| M-stopped fluid | 13 parts |
| aminopropyltriethoxysilane | 0.63 parts |
| dibutyltin dilaureate | 0.252 parts |

As was done in example one, the methyltriketoximosilane was added to the beginning of the reaction section, all other inputs were added at the same locations as described in example one. This sealant had an application rate of 311 g/min. and a flow 3.18 mm (0.15 inches).

The foregoing examples demonstrate both a reduction to practice of the instant invention and an operable embodiment of the instant invention, specifically the decreased gravity induced vertical flow or sag obtained with ketoxime sealants when the ketoxime and polymer are introduced into a reaction section preceding the extruder. More generally, the introduction of a cross-linking agent and a silicone polymer into a reaction section preceding the extruder produces a ketoxime silicone containing sealant that exhibits low vertical flow or sag.

## Claims

1. A method for producing a room-temperature vulcanizable composition having a high thixotropy and a high rate of extrusion from an extruder having a front end and an exit end with a middle in between, said extruder preceded by a static mixer having an entry and an exit to a first injection port of said extruder, said extruder having a second injection port after the first injection port, a third injection port at the middle of said extruder and a fourth injection port between the middle of the extruder wherein is located the third injection port and the exit port, said method comprising the steps of:
(1) supplying a base composition (A) to a static reactor which feeds the base composition from an exit port of the static mixer to an extruder at a first supply port of the extruder, said base composition; (A) comprising 100 parts by weight of a diorganopolysiloxane polymer (A1), said diorganopolysiloxane polymer having the formula HO(R₂SiO)ₓH where each R is a monovalent hydrocarbon radical free of aliphatic unsaturation and containing from 1 to 10 carbon atoms, and x varies so that (A1) has a viscosity ranging from 600 to 300,000 cps at 25°C; and at least one cross-linking agent (A4) selected from the group consisting of alkyl-tris(dialkylketoximo)silane, alkyl-tris(dialkenyl-ketoximo)silane, alkyl-tris(alkylalkenyl-ketoximo)silane, alkenyltris(dialkyl-ketoximo)silane, alkenyl-tris(dialkenylketoximo)silane, alkenyl-tris(alkylalkenylketoximo)silane; wherein said diorganopolysiloxane polymer (A1) and said cross-linking agent (A4) are reacted at a temperature ranging from 20°C to 120°C for a period of time ranging from 2 minutes to 60 minutes, prior to introduction into the extruder and
(2) adding at a second injection port (A2) from 3 to 25 parts by weight based upon (A1) of a silica filler having a surface area of from 100 to 300 m²/g in an untreated state; and (A3) up to 200 parts by weight based upon (A1) of finely divided calcium carbonate; and
(3) adding at a third injection port (B1) up to about 56 parts by weight based upon (A1), of an M-stopped fluid having a viscosity ranging from 50 to 10,000 cps at 25°C; and
(4) adding at a fourth injection port (B1) in an amount of up to 24 parts by weight based upon (A1), and (B2) a tin based catalyst present in an amount of up to 0.50 parts by weight based upon 100 parts of the base composition (A), and optionally (A5) gamma-aminopropyltriethoxysilane present in an amount up to 4 parts by weight based upon 100 parts of the base composition (A); wherein the amount of cross-linking agent (A4) ranges from 2 to 15 parts by weight based on the sum of (A1), (A2) and (A3), and
(5) extruding the resultant composition from the extruder such that said room temperature vulcanizable sealant composition having high application and low sag exists the exit port of the extruder.

2. The process of claim 1 wherein the cross-linking agent is selected from the group consisting of methyl-tris(methylethylketoximo)silane and vinyltris (methylethyl-ketoximo)silane.

3. The process of claim 1 or claim 2 wherein (A1) has a viscosity of from 2,000 to 200,000 cps at 25°C.

4. The process of any preceding claim wherein (A2) is treated with hexamethyldisilazane.

5. The process of any preceding claim wherein (B1) has a viscosity of from 50 to 3,000 cps at 25°C.

6. The process of any preceding claim wherein (B2) is present in an amount of from 0.05 to 0.4 parts by weight of the base composition (A).

7. The process of any preceding claim wherein (B2) comprises dibutyl tin dilaurate.

8. The process of any preceding claim wherein the silica filler (A2) has an average surface area of 100-300 m²/g in an untreated state.

9. The process of claim 1 wherein (A2) is treated with chlorosilane or octamethylcyclotetrasiloxane.

## Patentansprüche

1. Verfahren zur Herstellung einer bei Raumtemperatur vulkanisierbaren Zusammensetzung mit einer hohen Thixotropie und einer hohen Extrusionsgeschwindigkeit aus einem Extruder mit einer Eingangsseite und einer Ausgangsseite sowie einem dazwischenliegenden Mittelteil, wobei der Extruder einen vorgeschalteten statischen Mischer mit einem Eingangsteil und einem Ausgangsteil zu einer ersten Einspritzstelle des Extruders aufweist, der Extruder eine zweite Einspritzstelle nach der ersten Einspritzstelle aufweist, eine dritte Einspritzstelle in dem Mittelteil des Extruders und eine vierte Einspritzstelle zwischen dem Mittelteil des Extruders, worin die dritte Einspritzstelle lokalisiert ist und der Austrittsstelle, wobei das Verfahren die Schritte aufweist:
(1) Zufuhr einer Ausgangszusammensetzung (A) zu einem statischen Reaktor, welcher die Ausgangszusammensetzung von einem Ausgangsteil des statischen Mischers zu einem Extruder an einem ersten Zufuhrteil des Extruders überführt, wobei die Ausgangszusammensetzung (A) 100 Gewichtsteile eines Diorganopolysiloxanpolymers (A1), das Diorganopolysiloxanpolymer mit der Formel HO(R₂SiO)ₓH, worin jedes R ein monovalenter Kohlenwasserstoffrest frei von aliphatischer Ungesättigtheit ist und 1 bis 10 Kohlenstoffatome enthält, und x so variiert, daß (A1) eine Viskosität im Bereich von 600 bis 300.000 cps bei 25°C hat und zumindest ein Vernetzungsmittel (A4) aufweist, das ausgewählt ist aus der Gruppe bestehend aus Alkyl-tris(dialkylketoximo)silan, Alkyl-tris(dialkenylketoximo)silan, Alkyl-tris(alkylalkenyl-ketoximo)silan, Alkenyltris(dialkyl-ketoximo)silan, Alkenyl-tris(dialkenyl-ketoximo)silan, Alkenyl-tris(alkylalkenyl-ketoximo)silan, worin das Diorganopolysiloxanpolymer (A1) und das Vernetzungsmittel (A4) vor der Zugabe in den Extruder für eine Zeitspanne im Bereich von 2 Minuten bis 60 Minuten bei einer Temperatur im Bereich von 20°C bis 120°C umgesetzt werden, und
(2) Zugabe an einer zweiten Einspritzstelle (A2) von 3 bis 25 Gewichtsteilen, bezogen auf (A1), eines Silikafüllstoffs mit einer Oberfläche von 100 bis 300 m²/g in unbehandeltem Zustand und (A3) bis zu 200 Gewichtsteile, bezogen auf (A1), feinverteiltes Calciumcarbonat, und
(3) Zugabe an einer dritten Einspritzstelle (B1) von bis zu etwa 56 Gewichtsteilen, bezogen auf (A1), einer M-gestoppten Flüssigkeit mit einer Viskosität im Bereich von 50 bis 10.000 cps bei 25°C, und
(4) Zugabe an einer vierten Einspritzstelle (B1) in einer Menge von bis zu 24 Gewichtsteilen, bezogen auf (A1), und (B2) eines Zinnbasierenden Katalysators, der in einer Menge im Bereich von bis zu 0,50 Gewichtsteilen, bezogen 100 Gewichtsteile der Ausgangszusammensetzung (A), vorhanden ist, und gegebenenfalls (A5) Gammaaminopropyltriethoxysilan, das in einer Menge bis zu 4 Gewichtsteilen, bezogen auf 100 Teile der Ausgangszusammensetzung (A), vorhanden ist, worin die Menge des Vernetzungsmittels (A4) im Bereich von 2 bis 15 Gewichtsteile, bezogen auf die Summe aus (A1), (A2) und (A3), liegt, und
(5) Extrudieren der entstandenen Zusammensetzung aus dem Extruder, so daß bei die Raumtemperatur vulkanisierbare Dichtmittelzusammensetzung mit hoher Anwendbarkeit und geringer Durchbiegung am Ausgangsteil des Extruders vorhanden ist.

2. Verfahren gemäß Anspruch 1, **dadurch gekennzeichnet**, daß das Vernetzungsmittel ausgewählt ist aus der Gruppe bestehend aus Methyltris(methylethylketoximo)silan und Vinyltris(methylethyl-ketoximo)silan.

3. Verfahren gemäß Anspruch 1 oder Anspruch 2, **dadurch gekennzeichnet,** daß (A1) eine Viskosität von 2.000 bis 200.000 cps bei 25°C hat.

4. Verfahren gemäß einem der vorhergehenden Ansprüche, **dadurch gekennzeichnet**, daß (A2) mit Hexamethyldisilazan behandelt ist.

5. Verfahren gemäß einem der vorhergehenden Ansprüche, **dadurch gekennzeichnet**, daß (B1) eine Viskosität von 50 bis 3.000 cps bei 25°C hat.

6. Verfahren gemäß einem der vorhergehenden Ansprüche, **dadurch gekennzeichnet**, daß (B2) in einer Menge von 0,05 bis 0,4 Gewichtsteile der Ausgangszusammensetzung (A) vorhanden ist.

7. Verfahren gemäß einem der vorhergehenden Ansprüche, **dadurch gekennzeichnet**, daß (B2) Dibutylzinndilaurat aufweist.

8. Verfahren gemäß einem der vorhergehenden Ansprüche, **dadurch gekennzeichnet**, daß der Silikafüllstoff (A2) eine mittlere Oberfläche von 100 bis 300 m²/g in unbehandeltem Zustand hat.

9. Verfahren gemäß Anspruch 1, **dadurch gekennzeichnet**, daß (A2) mit Chlorsilan oder Octamethylcyclotetrasiloxan behandelt ist.

## Revendications

1. Procédé pour produire une composition vulcanisable à température ambiante, présentant une thixotropie élevée et une vitesse élevée d'extrusion, provenant d'une extrudeuse présentant un avant et une sortie avec une partie centrale entre les deux, ladite extrudeuse étant précédée par un malaxeur statique présentant une entrée et une sortie reliée au premier orifice d'injection de ladite extrudeuse, ladite extrudeuse présentant un second orifice d'injection après le premier orifice d'injection, un troisième orifice d'injection sur la partie centrale de ladite extrudeuse et un quatrième orifice d'injection entre la partie centrale de l'extrudeuse où est situé le troisième orifice d'injection et l'orifice de sortie, ledit procédé comprenant les étapes consistant à:
(1) introduire une composition de base (A) dans un réacteur statique qui fournit la composition de base depuis l'orifice de sortie du mélangeur statique à l'extrudeuse au niveau du premier orifice d'alimentation de l'extrudeuse, ladite composition de base (A) comprenant 100 parties en poids d'un diorganopolysiloxane polymère (A1), ledit diorganopolysiloxane polymère répondant à la formule HO(R₂SiO)ₓH où chaque R représente un groupe hydrocarboné monovalent sans insaturation de chaîne aliphatique et comportant de 1 à 10 atomes de carbone, et x varie pour que (A1) présente une viscosité se situant dans l'intervalle allant de 600 à 300 000 mPa.s (600 à 300 000 cps) à 25 °C ; et au moins un agent de réticulation (A4) choisi dans l'ensemble constitué par un alkyltris(dialkylcétoximo)silane, un alkyl-tris(dialcénylcétoximo)silane, un alkyl-tris(alkylalcénylcétoximo)silane, un alcényl-tris(dialkylcétoximo)silane, un alcényl-tris(dialcénylcétoximo)silane, un alcényl-tris(alkylalcénylcétoximo)silane ; dans lequel on fait réagir ledit diorganopolysiloxane polymère (A1) et ledit agent de réticulation (A4) à une température se situant dans l'intervalle allant de 20 °C à 120 °C pendant un laps de temps se situant dans l'intervalle allant de 2 minutes à 60 minutes, avant l'introduction dans l'extrudeuse ; et à
(2) ajouter, au niveau du second orifice d'injection, (A2) de 3 à 25 parties en poids par rapport à (A1), d'une charge de type silice présentant une surface spécifique allant de 100 à 300 m²/g à l'état non-traité ; et (A3) jusqu'à 200 parties en poids par rapport à (A1), de carbonate de calcium finement divisé ; et à
(3) ajouter, au niveau du troisième orifice d'injection, (B1) jusqu'à 56 parties environ en poids par rapport à (A1), d'un fluide à groupes terminaux M présentant une viscosité se situant dans l'intervalle allant de 50 à 10 000 mPa.s (50 à 10 000 cps) à 25 °C ; et à
(4) ajouter, au niveau du quatrième orifice d'injection, (B1) en une quantité allant jusqu'à 24 parties en poids par rapport à (A1), et (B2) un catalyseur à base d'étain présent en une quantité allant jusqu'à 0,50 partie en poids par rapport aux 100 parties de la composition de base (A), et éventuellement (A5) un gamma-aminopropyltriéthoxysilane présent en une quantité allant jusqu'à 4 parties en poids par rapport aux 100 parties de la composition de base (A) ; dans lequel la quantité d'agent de réticulation (A4) se situe dans l'intervalle allant de 2 à 15 parties en poids par rapport à la somme de (A1), de (A2) et de (A3), et à
(5) extruder la composition résultante de l'extrudeuse de telle sorte que ladite composition de matériau d'étanchéité vulcanisable à température ambiante présentant une grande application et une faible formation de coulures, sorte par l'orifice de sortie de l'extrudeuse.

2. Procédé selon la revendication 1, dans lequel l'agent de réticulation est choisi dans l'ensemble constitué par le méthyl-tris(méthyléthylcétoximo)silane et le vinyl-tris(méthyléthylcétoximo)silane.

3. Procédé selon la revendication 1 ou 2, dans lequel (A1) présente une viscosité allant de 2 000 à 200 000 mPa.s (2 000 à 200 000 cps) à 25 °C.

4. Procédé selon l'une quelconque des précédentes revendications, dans lequel (A2) est traitée avec l'hexaméthyldisilazane.

5. Procédé selon l'une quelconque des précédentes revendications, dans lequel (B1) présente une viscosité allant de 50 à 3 000 mPa.s (50 à 3 000 cps) à 25 °C.

6. Procédé selon l'une quelconque des précédentes revendications, dans lequel (B2) est présent en une quantité allant de 0,05 à 0,4 partie en poids de la composition de base (A).

7. Procédé selon l'une quelconque des précédentes revendications, dans lequel (B2) comprend le dilaurate de dibutylétain.

8. Procédé selon l'une quelconque des précédentes revendications, dans lequel la charge de type silice (A2) présente une surface spécifique moyenne de 100 à 300 m²/g à l'état non traité.

9. Procédé selon la revendication 1, dans lequel (A2) est traité avec du chlorosilane ou de l'octaméthylcyclotétrasiloxane.
